# EUROPEAN PATENT SPECIFICATION

(11) **EP 1 598 178 B1**
(45) Date of publication and mention of the grant of the patent: **09.01.2013**
(21) Application number: 05010678.0
(22) Date of filing: 17.05.2005
(51) Int. Cl.: B32B 27/08, B65D 65/40, B32B 7/02

(54) **Laminated high barrier shrinkable film**
Laminierte Schrumpffolie mit hoher Sauerstoffbarriere
Film rétractable laminé ayant une haute capacité d'arrêt de l'oxygène

(30) Priority: 17.05.2004 EP 04011653
(43) Date of publication of application: 23.11.2005
(73) Proprietor: Flexopack S A, 19400 Koropi (GR)
(72) Inventor: Ginossatis, Dimitris, Koropi Attikis 19400 (GR)
(74) Representative: Isarpatent

(56) References cited:
- EP-A- 1 300 238
- WO-A-03/016050
- DE-A- 3 528 666
- US-A- 4 133 924
- US-A- 4 391 862

## Description

The invention relates to laminated high oxygen barrier film for packaging applications and especially for shrinkable lidding applications.

Thermoplastic films are being used to package various articles including perishable food products which require protection from the environment, resistance to physical and environmental abuse during storage and distribution, and an attractive appearance. Optical properties such as high gloss and low haze contribute to the aesthetic consumer appeal of products packed in such packaging materials. Abuse resistance properties are important to package integrity and are essential to the viability of the package product.

Oxygen barrier characteristics are required to provide extended shelf life for the packaged product in the case of food items, and various materials have been used to provide lower gas permeability and thereby reduce the oxygen transmission of the film. For example, ethylene vinyl alcohol copolymer(EVOH) and polyvinylidene chloride(PVDC) have been known as efficient oxygen barrier materials used in food packaging. Both have also been proved to be good barriers to odors or fragrances.

Commercial films used in the shrinkable lidding market are multilayer oriented films with the double bubble or tenter frame technology comprising oxygen barrier materials such as EVOH, PVDC or polyamide. These materials are often not easy to stretch and process leading to complicated and expensive machinery and the use of expensive materials as softeners by adding them to EVOH and PA.

A shrink feature may be imparted to a thermoplastic film by orientation of the film during its manufacture. This shrink feature allows the film to shrink or, if restrained, create shrink tension within the packaging film upon exposure to heat, for example in a hot water bath or by exposure to hot air. In a typical process, manufactured film is stretched in either the machine direction or perpendicular to machine direction, or both in varying degrees to impart a desired degree of shrinkability to the resulting film. Shrinkable film provides a tight, smooth appearance to a product wrapped in a such film, as well as some added toughness to protect the product from abuse.

Another important characteristic of the described film used for packaging is the strong seal force between the film and the bottom web or tray that forms the package. The term sealing refers to any means for closing the package, such as heat sealing, ultrasonic, impulse, RF, clipping etc.

A further important characteristic of the packaging film is to have an acceptable antifog performance. By this we mean the ability of the film to remain clear after packaging of foods that allow moisture diffusion resulting drop formation on the film. The antifog performance is generally achieved by adding antifog masterbatch or antifog coating to the film.

By shrinkable lidding film we mean a film which seals on a tray or bottom web film and also shrinks so that it creates a nice tight package. Shrinking may be generated before sealing, after sealing or simultaneously with the shrinking action.

EP 1 300 238 discloses a multilayer packaging film comprising a barrier layer comprising vinylidene chloride and/or EVOH.

### SUMMARY OF THE INVENTION

The film of the invention solves the aforementioned difficulties by providing a multilayer heat shrinkable film consisting of a laminate of two films 1 and 2, wherein film 1 has a glycerine shrinkage of more than 20% at 110°C for 5 seconds in at least one of MD, TD directions and film 2 has a glycerine shrinkage of less than 20% at 110°C for 5 seconds in at least one of MD, TD directions, wherein film 1 comprises at least one material from polyethylene homopolymer, copolymer or terpolymer, polypropylene homopolymer, copolymer or terpolymer, PET, PBT, PETG and polyamide, film 2 comprises at least one material from PVDC and EVOH and wherein film 1 is produced by a double bubble process or tenter frame process and film 2 is produced by a blown film process. Shrinkages are measured according to ASTM D 2732.

Preferably, the film of the present invention consists of a laminate of films 1 and 2, wherein film 1 has a shrinkage of more than 25%, preferably more than 30% at 110C in at least one of MD, TD directions, and/or wherein film 2 has a shrinkage of less than 10%, preferably less than 5% at 110C in at least one of MD, TD directions.

Furthermore, the shrinkage of the laminate in glycerine at 110°C for 5 seconds is at least 20% in at least one of MD, TD directions.

The film provided in the present invention is formed by lamination preferably of a polyolefin based heat shrinkable oriented film to a multilayer oxygen barrier film wherein the shrinkability of preferably the first film is bigger in at least one of MD, TD directions compared to the second film. The shrinkability of the polyolefin film surprisingly controls the shrinkability of the laminate and the final article offers a good combination of the desired properties such as degree of shrinkage, puncture and abuse resistance, optical properties and antifog properties.

### DEFINITIONS

As used herein, the term "polymer" refers to the product of a polymerization reaction and is inclusive of homopolymers, copolymers, terpolymers etc.

As used herein, the term "homopolymer" is used with reference to a polymer resulting from the polymerization of a single monomer.

As used herein the term "copolymer" refers to polymers formed by the polymerization reaction of at least two different monomers.

As used herein, the term "polypropylene" refers to any polymer comprising propynene polymerization units regardless of whether the polymer is a homopolymer or a copolymer and further includes blends of such homopolymers and copolymers.

As used herein the term "ethylene propylene copolymer" refers to polypropylene copolymerized with ethylene monomer.

As used herein the phrase "ethylene alpha-olefin copolymer" generally designates copolymers of ethylene with one or more comonomers selected from C3 to C20 alpha olefins such as 1-butene, 1-pentene, 1-hexene, 1-octene etc., in which the polymer molecules comprise long chains with relatively few side chain branches.

Ethylene/ alpha-olefin copolymers generally have a density in the range of from about 0.86 g/cm³ to about 0.94 g/cm³. The term linear low density polyethylene (LLDPE) is generally understood to include the ethylene/alpha-olefin copolymers of about 0.915 to about 0.94 g/cm³. Sometimes linear polyethylene in the density range of 0.926 to 0.940 is referred to as linear medium density polyethylene (LMDPE). Lower density ethylene/alpha-olefin copolymers may be referred as VLDPE or ULDPE (very low density polyethylene or ultra low density polyethylene).

The phrase "ethylene/alpha-olefin copolymer" also includes homogeneous polymers such as the metallocene catalysed EXACT® polymers obtainable from Exxon Mobil , TAFMER® polymers obtainable from Mitsui and long chain branched metallocene catalysed homogeneous polymers which are obtainable by DOW® as AFFINITY® resins. Also polymers like EXCEED® from Exxon Mobil and ELITE® from DOW® are included in ethylene/ alpha-olefin copolymers.

As used herein "EVOH" refers to ethylene vinyl alcohol copolymer.

As used herein "PVDC" refers to vinylidene chloride homopolyers and copolymers.

As used herein, the term "polyamide" refers to high molecular weight polymers having amide linkages along the molecular chain and refers more specifically to synthetic polyamides such as nylons.

As used herein, the term "barrier" are used with reference to the ability of films to serve as barrier to oxygen or other gases.

As used herein, the term "oriented" refers to a polymer containing material which has been stretched at an elevated temperature, followed by being "set" in the stretched configuration by cooling the material while substantially retaining the stretched dimensions.

As used herein, the term "lamination", "laminate" and "laminated film" refer to the process and resulting product made by bonding together two or more layers of film or other materials. Lamination can be accomplished by joining layers with adhesives, joining with heat and pressure, and even spread coating and extrusion coating.

As used herein, the phrase "heat shrinkable", "heat shrink" and the like, refer to the tendency of a film, especially an oriented film to shrink upon the application of heat.

As used herein, the phrase "ethylene vinyl acetate" or EVA, is used to refer to a copolymer formed from ethylene and vinyl acetate monomers, wherein the ethylene derived units in the copolymer are present in major amounts, preferably between about 60 to about 98 percent, while the vinyl acetate derived units in the copolymer are present in minor amounts, preferably between about 2 and 40 percent.

As used herein, the phrase "ethylene methyl acrylate", or EMA, is used to refer used to refer to a copolymer formed from ethylene and methyl acrylate monomers, wherein the ethylene derived units in the copolymer are present in major amounts, preferably between about 60 to about 98 percent, while the methyl acrylate derived units in the copolymer are present in minor amounts, preferably between about 2 and 40 percent.

### DETAILED DESCRIPTION.

The present invention is a laminated film consisting of two films.

Film 1 is preferably produced by double bubble process or tenter frame process and its shrinkage in 110°C along at least one of MD, TD is preferably more than 20%. Film 1 preferably comprises polyolefins, such as polyethylene homopolymers, copolymers, terpolymers, polypropylene homopolymers, polypropylene copolymers and terpolymers. In another preferred embodiment, film 1 comprises polyamide.

It is particularly preferred that the multilayer heat shrinkable film of the present invention comprises a laminate of film 1 and film 2 wherein
film 1 comprises at least one material from polyethylene homopolymer, copolymer or terpolymer, polypropylene homopolymer, copolymer or terpolymer, PET, PBT, PETG and polyamide
film 2 comprises at least one material from PVDC and EVOH.

Film 2 is preferably produced by conventional blown film method , shrinking at 110°C preferably less than 20% with low shrinkforce in at least one of MD, TD. Film 2 incorporates high barrier material such as PVDC, EVOH or polyamide. In a preferred embodiment, PVDC is used.

Particularly preferred film 2 comprises an antifog additive or an antifog coating.

It has been surprisingly found that the shrinkage of the laminated film is controlled by film 1, so that the laminated film has a bigger shrinkage than film 2. It has also been confirmed that by selecting proper thicknesses of films 1 and 2, we may select the desired level of shrinkability and shrink force.

The amount of shrinkage and its force at 110°C is measured by dipping an article of 10 cm width and 10 cm length in glycerine bath for 5 seconds, according to ASTM D 2732.

In a preferred embodiment , film 1 may be of the structure PE/PP/PE, where PE can be low density polyethylene or ethylene a-olefin copolymer. PP may be polypropylene homopolymer, copolymer or terpolymer. In another embodiment, film 1 may be shrinkable polyamide, PET, PBT, PETG or other combinations of polyester copolymers.

In a preferred embodiment, film 2 may comprise ethylene a olefin copolymers, low density polyethylene, EVAs , EMAs, tie layers, EVOH, PVDC or polyamide.

Both films 1 and 2 may also contain additives such as slip agents, antiblock agents, antifog agents, UV quenchers etc. generally known to persons skilled in the art.

Preferably the laminate or the films of which it consists are irradiated.

Film 2 comprises preferably a lamination layer, several adjacent layers and a sealing layer. In one non limiting embodiment of the present invention the number of layers of each film 1 and 2 is one to nine layers. Proper selection of the number of layers depends on the kind of use and can be properly selected by a person skilled in the art. The oxygen barrier material provides preferably an oxygen transmission rate through the entire multilayer film below about 20 cm³/lm²/ 24hrs/atm. In a preferred embodiment of the invention, the oxygen barrier layer comprises polyamides(e.g. Nylon®), a hydrolyzed ethylene vinyl acetate copolymer (EVOH) or a vinylidene copolymer, preferably vinylidene chloride-vinyl chloride copolymer (VC copolymer) or vinylidene chloride-methyl acrylate copolymer(MA copolymer). Preferably the oxygen barrier layer thickness is between about 1 µm and about 13 µm.

In the above described heat shrinkable multilayer film production process, film 1 or 2 or the laminate of 1 and 2 may be exposed to atomic radiation. By the exposure to atomic radiation the final product may be provided with improved heat resistance and mechanical strength. In the present invention, known actinic radiation such as a rays, β rays, γ rays, electron rays or X rays may be used. In order to provide an adequate level of crosslinking effect, electron rays and γ rays are preferred. Electron rays are particularly preferred and the radiation dose may be in the range of 1 to 20 MRAD.

### Example 1.

One preferred structure comprises the following two films.

Film 1. Polyolefin based heat shrinkable film, manufactured with double bubble process, thickness 19 µm. Commercial name is Clarus® 700 and is produced by GEFO FOLIEN.

Film 2. Nine layer oxygen barrier film with thickness 22 microns.

Films were laminated in a solventless lamination unit using commercial adhesives.

Structure of film 2.

| | |
|---|---|
| Lamination layer microns | 80% PE1+ 19% PE2+ 1% antiblock/slip additives, thickness 5 |
| Adjacent layer | 70% PE1+ 30% PE2, thickness 1 micron |
| Adjacent layer | E1, thickness 2 microns |
| Adjacent layer | 70%M1+ 30% M2, thickness 1 micron |
| Adjacent layer | PVDC 2 microns |
| Adjacent layer | 70%M1+ 30% M2, thickness 1 micron |
| Adjacent layer | 90% E1+ 10% AF1, thickness 2 microns |
| Adjacent layer | 70% PE1+ 18% AF1+12% PE2, 2 microns |
| Sealing layer | 70%PE1+ 20%AF1+ 10% PE2, 5 microns |

The abbreviations are explained in detail in Table 1.

### Example 2.

Film 1. Polyolefin based heat shrinkable film, manufactured with double bubble process, thickness 19 microns. Commercial name is Clarus® 110 GG and is produced by GEFO FOLIEN.

Film 2. Nine layer oxygen barrier film with thickness 22 microns, same as example 1.

Films were laminated in a solventless lamination unit using commercial adhesives.

### Shrinkage and optics comparisons

The shrinkage of films 1 and 2 is compared to two competition films as follows. Specimens with length 10 cm and width 10 cm along the MD and TD direction are immersed in glycerine bath at 110°C for 5 seconds. This test has been used by the applicant for a good simulation of shrinkage in real cases of shrinking lidding films. Measurement is according to ASTM D 2732.

The optical properties are tested according to ASTM D1003 (haze) and BS2782 (gloss).

The two competition films are oriented, heat shrinkable, coextruded films comprising polyamide and EVOH.

| | MD SHRINKAGE(110C, 5 SEC) | TD SHRINKAGE(110 C, 5 SEC) | HAZE | GLOSS |
|---|---|---|---|---|
| COMPETITION 1 | 20 | 25 | 14 | 72 |
| COMPETITION 2 | 29 | 31 | 14.5 | 70 |
| EXAMPLE 1 | 32 | 28 | 13 | 75 |
| EXAMPLE 2 | 40 | 42 | 10.5 | 80 |

The shrinkage was also measured at 130 C for 10 seconds in glycerine bath as described above. This simulates the use of the product in higher oven temperatures.

| | MD SHRINKAGE(130C, 1 SEC) | TD SHRINKAGE(130 C, 10 SEC) |
|---|---|---|
| COMPETITION 1 | 25 | 30 |
| COMPETITION 2 | 22 | 45 |
| EXAMPLE 1 | 75 | 52 |
| EXAMPLE 2 | 80 | 75 |

Thus it is obvious that by the present invention can be obtained higher shrinkage values than state of the art.

### Seal strength comparisons.

Seal strength was compared between example 1 of the present invention and the two competition examples. The seal strength tests were done in a Toss machine, 1 sec heating time, 0.5 sec cooling time, 0.2 MPa (2 bar) pressure and temperatures as follows.

The sealing was done from side of film 2 to side of film 2 in the case of example 1. In the two comparison samples it was done as "sealing layer to sealing layer".

The sealing strength was measured in kg/15mm.

| Temp | | Comp 1 | Comp 2 | Example 1 |
|---|---|---|---|---|
| 120 | | 2.1 | 0.7 | 2.4 |
| 130 | | 2.9 | 0.8 | 2.9 |
| 140 | | 3.2 | 1.0 | 3.1 |

Abbreviations of the two examples are explained as follows in table 1

**TABLE 1**

| ABBR. | RESIN | COMPANY | TYPE | DENSITY |
|---|---|---|---|---|
| | | | | |
| PE1 | 18PFAX | BASELL | METALLOCENE LLDPE | 0.918 |
| PE2 | 1020FN24 | ATOFINA | LDPE | 0.924 |
| E1 | ELVAX 3190 | DUPONT | EVA | 0.94 |
| M1 | 29MAO3 | ATOFINA | EMA | 0.95 |
| M2 | 24MAO5 | ATOFINA | EMA | 0.94 |
| AF1 | 0202LD | CONSTAB | ANTIFOG | |

## Claims

1. A multilayer heat shrinkable plastic film consisting of a laminate of two films 1 and 2, wherein
film 1 has a hot glycerine shrinkage of more than 20% at 110 °C for 5 seconds in at least one of MD, TD directions; and
film 2 has a hot glycerine shrinkage of less than 20% at 110 °C for 5 seconds in at least one of MD, TD directions,
wherein
film 1 comprises at least one material from polyethylene homopolymer, copolymer or terpolymer, polypropylene homopolymer, copolymer or terpolymer, PET, PBT, PETG and polyamide,
film 2 comprises at least one material from PVDC and EVOH,
and wherein
film 1 is produced by a double bubble process or tenter frame process and film 2 is produced by a blown film process.

2. Film according to claim 1 wherein film 1 has a shrinkage of more than 25%, preferably more than 30% at 110 °C for 5 seconds in at least one of MD, TD directions; and/or
wherein film 2 has a shrinkage of less than 10%, preferably less than 5% at 110 °C for 5 seconds in at least one of MD, TD directions.

3. Film according to claim 1 or 2 wherein at least one of films 1 and 2, preferably film 2, comprises an oxygen barrier material.

4. Film according to one or more of the preceding claims wherein film 2 comprises a lamination layer, several adjacent layers and a sealing layer.

5. Film according to one or more of the preceding claims wherein the oxygen barrier material provides an oxygen transmission rate through the entire multilayer film is below 20 cm³/1 m² /24 hrs/atm.

6. Film according to one or more of the preceding claims wherein the oxygen barrier layer comprises polyamides (e.g. Nylon), a hydrolyzed ethylene vinyl acetate copolymer (EVOH) or a vinylidene copolymer, preferably vinylidene chloride-vinyl chloride (PVDC) or vinylidene chloride-methyl acrylate copolymer (MA-VDC).

7. Film according to one or more of the preceding claims wherein the oxygen barrier layer thickness is between 1 µm to about 13 µm.

8. Film according to one or more of the preceding claims wherein film 1 includes polyolefins, preferably polyethylene homopolymers, polyethylene copolymers, polyethylene terpolymers, polypropylene homopolymers, polypropylene copolymers, polypropylene terpolymers, PET, PBT, PETG, a PE/PP/PE layer, and/or a polyamide or a combination thereof.

9. Film according to one or more of the preceding claims wherein film 1 includes a shrinkable polyamide, PET, PBT, PETG or other combinations of polyester copolymers.

10. Film according to one or more of the preceding claims wherein film 2 includes layers of ethylene-alpha olefine copolymers, LDPEs, EVAs, EMAs, EVOHs, PVDC and/or tie layers.

11. Film according to one or more of the preceding claims wherein one or more of the layers of film 1 or 2 additionally contain one or more film additives, preferably slip agents, antiblocking agents, colorants, odor inhibitors, oxygen inhibitors, antifog additives and/or an antifog coating.

12. A multilayer film according to one or more of the preceding claims wherein the film is irradiated.

13. A multilayer film according to one or more of the preceding claims wherein film 2 comprises an antifog additive or an antifog coating.

14. A multilayer film according to one or more of the preceding claims, where the shrinkage of the laminate in glycerine at 110°C for 5 seconds is at least 20% in at least one of MD, TD directions.

15. A method for producing a film in accordance with one or more of the preceding claims wherein at least films 1 and 2 are produced separately and are then subsequently sealed or laminated together to form the multilayer heat shrinkable plastic film.

16. A method for producing a film in accordance with claim 12 wherein either film 1 and/or 2 or the final film are irradiated.

17. Use of a film in accordance with one or more of the preceding claims 1-14 as a shrinkable lidding film.

## Patentansprüche

1. Wärmeschrumpfbarer Mehrschicht-Kunststofffilm, bestehend aus einem Laminat aus zwei Filmen 1 und 2, wobei
Film 1 eine Glycerin-Wärmeschrumpfung von mehr als 20% bei 110 °C für 5 Sekunden in zumindest der Längs- oder Querrichtung aufweist; und
Film 2 eine Glycerin-Wärmeschrumpfung von weniger als 20% bei 110 °C für 5 Sekunden in zumindest der Längs- oder Querrichtung aufweist,
wobei
Film 1 zumindest ein Material aus Polyethylen-Homopolymer, Copolymer oder -Terpolymer, Polypropylen-Homopolymer, -Copolymer oder -Terpolymer, PET, PBT, PETG und Polyamid umfasst,
Film 2 zumindest ein Material aus PVDC und EVOH,
und wobei
Film 1 durch ein Double-Bubble-Verfahren oder ein Tenter-Frame-Verfahren hergestellt wird und Film 2 durch ein Blasfolien- bzw. Blown-Film-Verfahren hergestellt wird.

2. Film nach Anspruch 1, wobei Film 1 eine Schrumpfung von mehr als 25%, vorzugsweise mehr als 30% bei 110 °C für 5 Sekunden in zumindest einer der Längs- oder Querrichtungen aufweist; und/oder
wobei Film 2 eine Schrumpfung von weniger als 10%, vorzugsweise weniger als 5% bei 110 °C für 5 Sekunden in zumindest einer der Längs- oder Querrichtungen aufweist.

3. Film nach Anspruch 1 oder 2, wobei zumindest einer der Filme 1 und 2, vorzugsweise Film 2, eine Sauerstoffbarriereschicht umfasst.

4. Film nach einem oder mehreren der vorhergehenden Ansprüche, wobei Film 2 eine Laminierschicht, mehrere Nebenschichten und eine Siegelschicht umfasst.

5. Film nach einem oder mehreren der vorhergehenden Ansprüche, wobei das Sauerstoffbarrierematerial eine Sauerstofftransmissionsrate durch den gesamten Mehrschichtfilm bereitstellt, die weniger als 20 cm³/1 m² /24 hrs/atm beträgt.

6. Film nach einem oder mehreren der vorhergehenden Ansprüche, wobei die Sauerstoffbarriereschicht Polyamide (beispielsweise Nylon), hydrolysiertes EthylenVinylacetat-Copolymer (EVOH) oder ein Vinyliden-Copolymer, vorzugsweise Vinylidenchlorid-Vinylchlorid (PVDC) or Vinylidenchlorid-Methylacrylat-Copolymer (MA-VDC) umfasst.

7. Film nach einem oder mehreren der vorhergehenden Ansprüche, wobei die Sauerstoffbarriereschicht eine Dicke zwischen 1 µm bis ungefähr 13 µm aufweist.

8. Film nach einem oder mehreren der vorhergehenden Ansprüche, wobei Film 1 Polyolefine, vorzugsweise Polyethylen Homopolymere, Polyethylen Copolymere, Polyethylen Terpolymere, Polypropylen Homopolymere, Polypropylen Copolymere, Polypropylen Terpolymere, PET, PBT, PETG, eine PE/PP/PE-Schicht, und /oder ein Polyamid oder eine Kombination hiervon einschließt.

9. Film nach einem oder mehreren der vorhergehenden Ansprüche, wobei Film 1 ein schrumpfbares Polyamid, PET, PBT, PETG oder andere Kombinationen von Polyester-Copolymeren einschließt.

10. Film nach einem oder mehreren der vorhergehenden Ansprüche, wobei Film 2 Schichten aus Ethylen-Alpha Olefin Copolymeren, LDPEs, EVAs, EMAs, EVOHs, PVDC und/oder Haftschichten einschließt.

11. Film nach einem oder mehreren der vorhergehenden Ansprüche, wobei eine oder mehrere der Schichten von Film 1 oder 2 zusätzlich ein oder mehrere Filmzusatzstoffe, vorzugsweise Gleitmittel, Antiblockmittel, Farbstoffe, Geruchshemmstoffe, Sauerstoffhemmstoffe, Zusatzstoffe für die Beschlagfreiheit und/oder eine Beschlagfreiheitsbeschichtung enthalten.

12. Mehrschichtfilm nach einem oder mehreren der vorhergehenden Ansprüche, wobei der Film bestrahlt ist.

13. Mehrschichtfilm nach einem oder mehreren der vorhergehenden Ansprüche, wobei Film 2 einen Zusatzstoff für die Beschlagfreiheit oder eine BeschlagfreiheitsBeschichtung umfasst.

14. Mehrschichtfilm nach einem oder mehreren der vorhergehenden Ansprüche, wobei die Schrumpfung des Laminats in Glycerin bei 110 °C für 5 Sekunden zumindest 20% in zumindest einer der Längs- oder Querrichtungen beträgt.

15. Verfahren zur Herstellung eines Filmes nach einem oder mehreren der vorhergehenden Ansprüche, wobei zumindest Film 1 und 2 getrennt hergestellt und dann anschließend miteinander versiegelt oder laminiert werden, so dass ein wärmeschrumpfbarer Mehrschicht-Kunststofffilm gebildet wird.

16. Verfahren zur Herstellung eines Filmes nach Anspruch 12, wobei entweder Film 1 und/oder 2 oder der endgültige Film bestrahlt werden.

17. Verwendung eines Films nach einem oder mehreren der vorhergehenden Ansprüche 1- 14 als schrumpfbarer Abdeckfilm.

## Revendications

1. Film plastique multicouches thermorétractable constitué d'un stratifié de deux films 1 et 2, dans lequel le film 1 a une rétractation à la glycérine chaude supérieure à 20 % à 110 °C pendant 5 secondes dans au moins un des sens machine, transversal ; et
le film 2 a une rétractation à la glycérine chaude inférieure à 20 % à 110 °C pendant 5 secondes dans au moins un des sens machine, transversal,
dans lequel
le film 1 comprend au moins un matériau constitué d'homopolymère, copolymère ou terpolymère de polyéthylène, ou d'homopolymère, copolymère ou terpolymère de polypropylène, de PET, de PBT, de PETG et de polyamide,
le film 2 comprend au moins un matériau constitué de PVDC et d'EVOH,
et dans lequel
le film 1 est produit par un procédé à double bulle ou par un procédé à cadre d'étirage et le film 2 est produit par un procédé de soufflage de film.

2. Film selon la revendication 1
dans lequel le film 1 a une rétractation supérieure à 25 %, préférentiellement supérieure à 30 % à 110 °C pendant 5 secondes dans au moins un des sens machine, transversal ; et/ou
dans lequel le film 2 a une rétractation inférieure à 10 %, préférentiellement inférieure à 5 % à 110°C pendant 5 secondes dans au moins un des sens machine, transversal.

3. Film selon la revendication 1 ou 2, dans lequel au moins un des films 1 et 2, préférentiellement le film 2, comprend un matériau de barrière à oxygène.

4. Film selon l'une ou plusieurs des revendications précédentes, dans lequel le film 2 comprend une couche de stratification, plusieurs couches adjacentes et une couche d'étanchéité.

5. Film selon l'une ou plusieurs des revendications précédentes, dans lequel le matériau de barrière à oxygène fournit un taux de transmission d'oxygène à travers la totalité du film multicouches inférieur à 20 cm³/1 m²/24 heures/atm.

6. Film selon l'une ou plusieurs des revendications précédentes, dans lequel la couche de barrière à oxygène comprend des polyamides (par ex. du Nylon), un copolymère d'éthylène et d'acétate de vinyle hydrolysé (EVOH) ou un copolymère vinylidène, préférentiellement du chlorure de polyvinylidène (PVDC) ou un copolymère de chlorure de vinylidène-acrylate de méthyle (MA-VDC).

7. Film selon l'une ou plusieurs des revendications précédentes, dans lequel l'épaisseur de la couche de barrière à oxygène est située entre 1 µm et environ 13 µm.

8. Film selon l'une ou plusieurs des revendications précédentes, dans lequel le film 1 comprend des polyoléfines, préférentiellement des homopolymères de polyéthylène, des copolymères de polyéthylène, des terpolymères de polyéthylène, des homopolymères de polypropylène, des copolymères de polypropylène, des terpolymères de polypropylène, du PET, du PBT, du PETG, une couche de PE/PP/PE, et/ou un polyamide ou leur association.

9. Film selon l'une ou plusieurs des revendications précédentes, dans lequel le film 1 comprend un polyamide rétractable, du PET, du PBT, du PETG ou d'autres associations de copolymères de polyester.

10. Film selon l'une ou plusieurs des revendications précédentes, dans lequel le film 2 comprend des couches de copolymères d'éthylène-alpha-oléfine, de LDPE, d'EVA, d'EMA, d'EVOH, de PVDC et/ou des couches d'accrochage.

11. Film selon l'une ou plusieurs des revendications précédentes, dans lequel une ou plusieurs des couches du film 1 ou 2 contiennent en outre un ou plusieurs additifs de film, préférentiellement des agents glissants, des agents anti-bloquants, des colorants, des inhibiteurs d'odeur, des inhibiteurs d'oxygène, des additifs anti-buée et/ou un revêtement anti-buée.

12. Film multicouches selon l'une ou plusieurs des revendications précédentes, dans lequel le film est irradié.

13. Film multicouches selon l'une ou plusieurs des revendications précédentes, dans lequel le film 2 comprend un additif anti-buée ou un revêtement anti-buée.

14. Film multicouches selon l'une ou plusieurs des revendications précédentes, où la rétractation du stratifié dans la glycérine à 110°C pendant 5 secondes est au moins de 20 % dans au moins un des sens machine, transversal.

15. Procédé de fabrication d'un film selon l'une ou plusieurs des revendications précédentes, dans lequel au moins les films 1 et 2 sont fabriqués séparément et sont alors scellés par la suite ou assemblés par stratification pour former le film plastique multicouches thermorétractable.

16. Procédé de production d'un film selon la revendication 12, dans lequel soit le film 1 et/ou 2 soit le film final sont irradiés.

17. Utilisation d'un film selon l'une des revendications précédentes 1 à 14 sous la forme d'un film de recouvrement rétractable.
